# EUROPEAN PATENT SPECIFICATION

(11) **EP 2 911 427 B1**
(45) Date of publication and mention of the grant of the patent: **09.10.2019**
(21) Application number: 13850909.6
(22) Date of filing: 01.08.2013
(51) Int. Cl.: H04W 8/18, H04W 8/12

(54) **METHOD AND SYSTEM FOR DIFFERENTIATING SUBSCRIBER**
VERFAHREN UND SYSTEM ZUR UNTERSCHEIDUNG VON TEILNEHMERN
PROCÉDÉ ET SYSTÈME DE DIFFÉRENCIATION D'ABONNÉ

(30) Priority: 31.10.2012 CN 201210427847
(43) Date of publication of application: 26.08.2015
(73) Proprietor: Huawei Technologies Co., Ltd., Longgang District Shenzhen, Guangdong 518129 (CN)
(72) Inventor: ZHANG, Wanqiang, Shenzhen Guangdong 518129 (CN); ZHOU, Weihua, Shenzhen Guangdong 518129 (CN); GUO, Yali, Shenzhen Guangdong 518129 (CN)
(74) Representative: Epping - Hermann - Fischer
(86) International application number: PCT/CN2013/080625
(87) International publication number: WO 2014/067304

(56) References cited:
- WO-A2-2008/103394
- CN-A- 1 852 304
- CN-A- 1 852 304
- CN-A- 102 630 081
- US-A1- 2011 045 826
- US-A1- 2012 214 452
- US-A1- 2012 246 325

## Description

### TECHNICAL FIELD

The present disclosure relates to the field of wireless communications, and in particular, to a method and a system for differentiating between a mobile virtual network operator subscriber and a real subscriber subscribing a network.

### BACKGROUND

In 3GPP communication criteria, a mobile network supports FLEX (flexible) function, that is, in an intra-domain (Intra-domain), one radio access network (English full name: Radio Access Network, abbreviated as RAN) node can be connected to multiple core network (English full name: Core Network, abbreviated as CN) nodes, while the multiple core network nodes connected to the radio access network node form a pool. When a specific core network connected to the radio access network has a breakdown or carries too much traffic, it can be switched to other core network within the pool, thus a problem of single point failure can be solved and load balancing can be achieved, additionally, when a user equipment (English full name: User Equipment, abbreviated as UE) moves in areas covered by different core networks within the pool, it does not need a handover of the core network to which the user equipment is attached, and signaling interactions between core networks can be reduced.

Furthermore, the core networks connected to the access network node may belong to public land mobile networks (English full name: Public Land Mobile Network, abbreviated as PLMN) of different operators, that is, a network sharing function. A current standard supports two types of network sharing scenarios: a multi-operator core network (English full name: Multi-Operator Core Network, abbreviated as MOCN) and a gateway core network (English full name: Gateway Core Network, abbreviated as GWCN). As for the MOCN, a base station connects core network nodes of different PLMNs, but the core network nodes belong to specific operators, and sharing cannot be performed among the core network nodes; as for the GWCN, not only the wireless access network nodes are shared, core network operators also share the core network nodes.

Currently, a newly-emerging network sharing mode rises gradually, that is, an operator may not have a basic network (for example, not have a base station and a core network, also not have its own spectrum resources and PLMN ID information), which rents a basic network of a certain PLMN to provide its subscribers with service instead. Such kind of mode is called as a wholesale mode, which may also be called as a mobile virtual network operator (English full name: Mobile Virtual Network Operator, abbreviated as MVNO), and a subscriber which the mobile virtual network operator provides with the service is called as a wholesale subscriber or an MVNO subscriber. In this mode, the PLMN ID information provided by the mobile virtual network operator can only be PLMN ID information of the rented network.

Additionally, in the network sharing (MOCN, GWCN), a user equipment (English full name: User Equipment, abbreviated as UE) selects a network according to broadcasted different PLMN IDs, and transmits the selected PLMN information to the network, a mobility management entity (English full name: Mobility Management Entity, abbreviated as MME) and a service GPRS supporting node (Service GPRS Supporting Node, SGSN) transfer the PLMN information selected by the UE (i.e. the PLMN information which provides services to the UE currently) to nodes such as an SGW and a PGW in subsequent processing. In this case, the nodes in the network perceive, under the network sharing configuration, the PLMN ID information which provides services to the UE currently. The network can differentiate between UEs according to a currently serving PLMN ID, for example, in a case of limited network resources, access and service quality of some PLMN subscribers are restricted.

However, as for a wholesale subscriber in the wholesale mode and a real subscriber subscribing a network, since they have the same PLMN ID information, thus a control plane node cannot differentiate between the real subscriber subscribing the network and the wholesale subscriber so as to control the accessing quantity of MVNO subscribers, and control and regulate the access and service quality of the MVNO subscribers.

Document "SYSTEM AND METHODS FOR USER SESSIONS WITH DYNAMIC SERVICE SELECTION" (US 2012/0214452 A1, Ellis L. WONG et al) discloses a system which generates dynamic call models within a network, allowing different user entities to have different service experience (see Abstract).

Document "NETWORK NODE AND METHOD TO CONTROL ROUTING OR BYPASSING OF DEPLOYED TRAFFIC DETECTION FUNCTION NODES" (US 2012/0246325 A1, Maria Belen Pancorbo Marcos et al) discloses a network which can control, through subscriber profile data and/or policy preconfigured control data, whether deep packet inspection for data flow/s for an Internet Protocol-Connectivity Access Network (IP-CAN) session established by an end user should take place, or not, according to a defined "User Privacy Policy", and, in the former case, to which traffic detection function (TDF) node the data flow(s) should be directed (see Abstract).

### SUMMARY

Embodiments of the present disclosure provide a method for differentiating between subscribers to differentiate between a real subscriber subscribing a network and a wholesale subscriber, thereby implementing differentiated control and processing of the two types of subscribers.

The object of the invention is solved by the subject-matter of the independent claims. Preferred embodiments are defined in the dependent claims.

### BRIEF DESCRIPTION OF DRAWINGS

FIG. 1 is a schematic flow chart of a method for differentiating between subscribers according to a first embodiment of the present disclosure;
FIG. 2 is a schematic flow chart of a method for differentiating between subscribers according to a second embodiment of the present disclosure;
FIG. 3 is a block diagram of a device for differentiating between subscribers according to a third embodiment of the present disclosure;
FIG. 4 is a block diagram of another device for differentiating between subscribers according to the third embodiment of the present disclosure;
FIG. 5 is a schematic flow chart of an attachment of a UE to an EUTRAN according to a fourth embodiment of the present disclosure;
FIG. 6 is a schematic flow chart of an attachment of a UE to an UTRAN according to a fifth embodiment of the present disclosure;
FIG. 7 is a flow chart of mobility management and session management after an attachment is completed according to a sixth embodiment of the present disclosure;
FIG. 8 is a flow chart of a handover of a source ENB according to a sixth embodiment of the present disclosure;
FIG. 9 is a schematic flow chart of an access of a UE to a network in an EUTRAN according to a ninth embodiment of the present disclosure.

### DESCRIPTION OF EMBODIMENTS

In order to make objectives, technical solutions, and advantages of the present disclosure more clearly, the present disclosure will be described hereunder in details with reference to accompanying drawings and embodiments. It should be understood that the specifical embodiments described herein are only intended for interpreting the present disclosure, rather than limiting the present disclosure.

In embodiments of the present disclosure, after acquiring information of a mobile virtual network operator MVNO/Partner subscribed by a subscriber, a control plane node can differentiate between the subscriber and a real subscriber subscribing a network according to the information of the mobile virtual network operator MVNO/Partner subscribed by the subscriber, thus, when the network is congested, the real subscriber subscribing the network and a wholesale subscriber can be differentiated according to information configured by user equipments above, thereby implementing differentiated control and processing for the two types of subscribers.

### First Embodiment

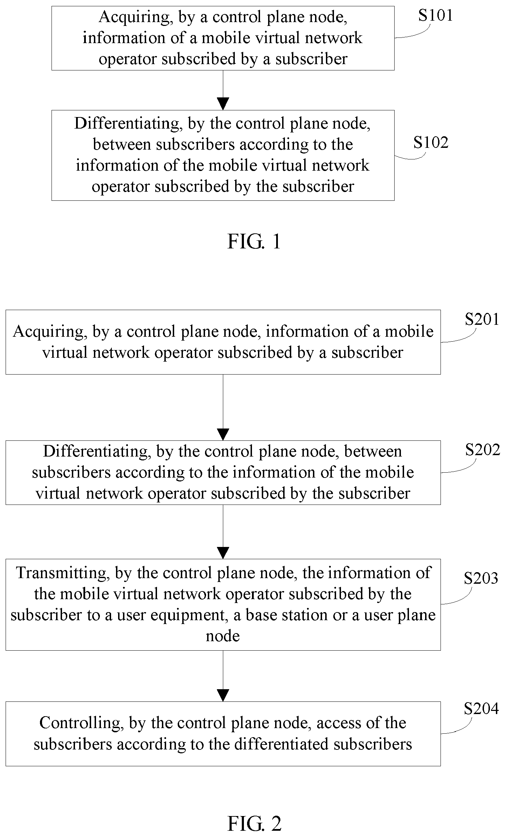

FIG. 1 is a schematic flow chart of implementing a method for differentiating between subscribers from a perspective of a control plane node device according to a first embodiment of the present disclosure, and details are as follows:
in step S101, acquiring, by the control plane node, information of a mobile virtual network operator MVNO/Partner subscribed by a subscriber.

Specifically, the acquiring of the information of the mobile virtual network operator subscribed by the subscriber may be in a manner of:
1. receiving, by the control plane node, the information of the mobile virtual network operator subscribed by the subscriber from a home subscriber server, a message which transmits the information may be a location update message or an insert subscriber data message.
2. acquiring, by the control plane node, the information of the mobile virtual network operator subscribed by the subscriber from a user plane node, wherein, after the information of the mobile virtual network operator subscribed by the subscriber is obtained by a policy and charging rules function from a service processor (English full name: Service Processor, abbreviated as SPR) or a user data record (English Full name: User Data Record, abbreviated as UDR), the information of the mobile virtual network operator subscribed by the subscriber is transmitted to the user plane node by the policy and charging rules function. The control plane node can acquire the information of the mobile virtual network operator subscribed by the subscriber from the user plane node via a create session response message or a create PDP context response message. Or,
3. receiving, by the control plane node, the information of the mobile virtual network operator subscribed by the subscriber reported by a user equipment which is used by the subscriber, and implementations thereof include: receiving, by the control plane node, the information of the mobile virtual network operator subscribed by the subscriber reported by the user equipment which is used by the subscriber via an attachment request message or a routing area update request message or a tracking area update request message; or
   receiving, by the control plane node, the information of the mobile virtual network operator subscribed by the subscriber reported by the user equipment via an access layer message transmitted by a base station, wherein, the access layer message is reported to the base station by the user equipment which is used by the subscriber.

In embodiments of the present disclosure, the control plane node includes one or more of a serving GPRS support node (English full name: Serving GPRS Support Node, abbreviated as SGSN), a mobility management entity (English full name: Mobility Management Entity, abbreviated as MME) and a mobile switching center (English full name: Mobile Switching Center, abbreviated as MSC), the user plane node includes one or more of a gateway GPRS support node (English full name: Gateway GPRS Support Node, abbreviated as GGSN), a serving gateway (English full name: Serving Gateway, abbreviated as S-GW) and a packet data network gateway (English full name: PDN Gateway, abbreviated as P-GW).

Herein, before acquiring the information, a step of configuring the information of the virtual network operator subscribed by the subscriber for the user equipment in advance may be included, which may be implemented by configuring the information of the mobile virtual network operator subscribed by the subscriber in a manner of object management architecture device manage (English full name: Object Management Architecture Device Manage, abbreviated as OMA DM) or subscriber identity module over-the-air technology (English full name: Subscriber Identity Module Over-the-Air Technology, abbreviated as SIM OTA), or, configuring the information of the mobile virtual network operator subscribed by the subscriber in a SIM card of the user equipment. After acquiring the information of the mobile virtual network operator subscribed by the subscriber, by carrying the information of the mobile virtual network operator subscribed by the subscriber in an access layer message and/or a non-access layer message, the user equipment transmits the information to the base station.

When acquiring the information of the mobile virtual network operator subscribed by the subscriber according to embodiments of the present disclosure, a step of selecting to acquire the information of the mobile virtual network operator subscribed by the subscriber from other control plane nodes may also be included, which is specifically: judging whether the control plane node is stored with the information of the mobile virtual network operator subscribed by the subscriber, if not, then acquiring, by the control plane node, the information of the mobile virtual network operator subscribed by the subscriber from other control plane nodes.

In step S102, differentiating, by the control plane node, between subscribers according to the information of the mobile virtual network operator subscribed by the subscriber.

According to embodiments of the present disclosure, the information of the mobile virtual network operator subscribed by the subscriber is a specific mobile virtual network operator name or can be mapped into an index of the specific mobile virtual network operator name. The control plane node carries the information of the mobile virtual network operator subscribed by the subscriber via a context response message or a forward relocation request message.

In embodiments of the present disclosure, after acquiring information of the mobile virtual network operator MVNO/Partner subscribed by the subscriber, the
subscriber and a real subscriber subscribing a network can be differentiated according to the information of the
mobile virtual network operator MVNO/Partner subscribed by the subscriber, thus, when the network is congested, a control plane node can differentiate between the real subscriber subscribing the network and the wholesale subscriber according to information configured by user equipments above, thereby implementing differentiated control and processing of the two types of subscribers. As in optional operations of embodiments of the present disclosure, a reliable operation of network can be better protected by releasing a part of MVNO/Partner subscribers or rejecting joining of a new MVNO/Partner subscriber.

### Second Embodiment

FIG. 2 is a schematic flow chart of a method for differentiating between subscribers according to a second embodiment of the present disclosure, and details are as follows:
In step S201, acquiring, by a control plane node, information of a mobile virtual network operator subscribed by a subscriber.

In step S202, differentiating, by the control plane node, between subscribers according to the information of the mobile virtual network operator subscribed by the subscriber.

Step S201 and step S202 are the same as the first embodiment, thus details will not be repeated herein.

Optionally, embodiments of the present disclosure can also include step S303, in which the control plane node transmits the information of the mobile virtual network operator subscribed by the subscriber to a user equipment, a base station or a user plane node.

Specifically, the control plane node transmits a create session request message or a create PDP context request message which includes the information of the mobile virtual network operator subscribed by the subscriber to the user plane node; and/or
the control plane node transmits a message which includes the information of the mobile virtual network operator subscribed by the subscriber to the user equipment; and/or
the control plane node transmits a message which includes the information of the mobile virtual network operator subscribed by the subscriber to the base station.

Furthermore, embodiments of the present disclosure can also include step S304, in which the control plane node controls access of the subscribers according to the differentiated subscribers, and which is specifically:
controlling, by the control plane node, the accessed quantity of mobile virtual network operator subscribers, or controlling accessed service quality of mobile virtual network operator subscribers; or
in a case of network congestion, preferentially rejecting, by the control plane node, an access request of the mobile virtual network operator subscribers or, by the control plane node, releasing connections of the mobile virtual network operator subscribers; or
making a distinction at the time of charging according to the mobile virtual network operator subscribed by the subscriber.

In embodiments of the present disclosure, after transmitting information of a mobile virtual network operator MVNO/Partner subscribed by a subscriber, a control plane node is enabled to differentiate subscribers according to the information of the mobile virtual network operator subscribed by the subscriber, so that the subscriber can be differentiated from a real subscriber subscribing a network. The present disclosure is further optimized by the control plane node transmitting the information of the mobile virtual network operator subscribed by the subscriber to a user equipment, a base station or a user plane node, thereby making it more efficiently and quickly when acquiring the information of the mobile virtual network operator subscribed by the subscriber later. Furthermore, by controlling the access of mobile virtual network subscribers, thus, when the network is congested, the control plane node can differentiate the mobile virtual network operator MVNO subscribers according to information configured by user equipments above, release a part of MVNO/Partner subscribers, and reject joining of a new MVNO/Partner subscriber so as to better protect a reliable operation of the network.

### Third Embodiment

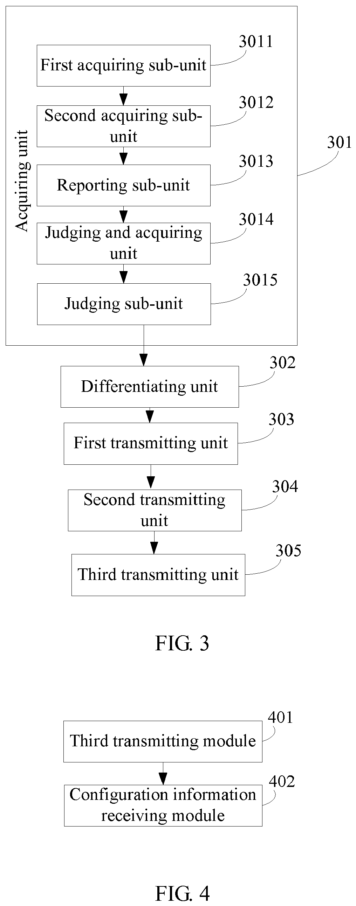

FIG. 3 is a schematic structural diagram of a server device for differentiating between subscribers according to embodiments of the present disclosure, and details are as follows:
The server device for differentiating between subscribers according to embodiments of the present disclosure includes an acquiring unit 301 and a differentiating unit 302.

The acquiring unit 301 is configured to acquire information of a mobile virtual network operator subscribed by a subscriber.

The differentiating unit 302 is configured to differentiate between subscribers according to the information of the mobile virtual network operator subscribed by the subscriber.

The acquiring unit 301 may include:
a first acquiring sub-unit 3011, configured to receive the information of the mobile virtual network operator subscribed by the subscriber from a home subscriber server; or
a second acquiring sub-unit 3012, configured to acquire the information of the mobile virtual network operator subscribed by the subscriber from a user plane node, wherein, the information of the mobile virtual network operator subscribed by the subscriber is transmitted to the user plane node by a policy and charging rules function after the policy and charging rules function acquires the information of the mobile virtual network operator subscribed by the subscriber from an SPR or a user data record (UDR); or
a reporting sub-unit 3013, configured to receive the information of the mobile virtual network operator subscribed by the subscriber reported by a user equipment which is used by the subscriber.

The first acquiring sub-unit 3011 may be configured to receive the information of the mobile virtual network operator subscribed by the subscriber from the home subscriber server via a location update acknowledgement message or an insert subscriber data message.

The second acquiring sub-unit 3012 may be configured to acquire the information of the mobile virtual network operator subscribed by the subscriber from the user plane node via a create session response message or a create PDP context response message.

The reporting sub-unit 3013 may be specifically configured to:
receive, by the control plane node, the information of the mobile virtual network operator subscribed by the subscriber reported by the user equipment which is used by the subscriber via an attachment request message or a routing area update request message or a tracking area update request message; or
receive, by the control plane node, the information of the mobile virtual network operator subscribed by the subscriber reported by the user equipment via an access layer message transmitted by a base station, wherein, the access layer message is reported to the base station by the user equipment which is used by the subscriber.

The acquiring unit 301 may include a judging and acquiring unit 3014 and a judging and acquiring sub-unit 3015.

The judging and acquiring unit 3014 is configured to judge whether the control plane node is stored with the information of the mobile virtual network operator subscribed by the subscriber, if not, then the control plane node acquires the information of the mobile virtual network operator subscribed by the subscriber from other control plane nodes.

The judging sub-unit 3015 is configured to judge whether the control plane node is stored with the information of the mobile virtual network operator subscribed by the subscriber, if not, then the control plane node acquires the information of the mobile virtual network operator subscribed by the subscriber from other control plane nodes.

Furthermore, the device may also include:
a first transmitting unit 303, configured to transmit a create session request message or a create PDP context request message which includes the information of the mobile virtual network operator subscribed by the subscriber to a user plane node; and/or
a second transmitting unit 304, configured to transmit a message which includes the information of the mobile virtual network operator subscribed by the subscriber to a user equipment; and/or
a third transmitting unit 305, configured to transmit a message which includes the information of the mobile virtual network operator subscribed by the subscriber to a base station.

The control plane node carries the information of the mobile virtual network operator subscribed by the subscriber via a context response message or a forward relocation request message. The information of the mobile virtual network operator subscribed by the subscriber is a specific mobile virtual network operator name or can be mapped into an index of the specific mobile virtual network operator name.

Correspondingly, devices for differentiating between subscribers corresponding to a user plane node, a home subscriber server and a user equipment are described respectively as follows:
1. the home subscriber server: the device for differentiating between subscribers includes a first transmitting module which is configured to transmit information of a mobile virtual network operator subscribed by a subscriber to a control plane node, so that the control plane node differentiates between subscribers according to the information of the mobile virtual network operator subscribed by the subscriber. The first transmitting module is specifically configured to transmit the information of the mobile virtual network operator subscribed by the subscriber to the control plane node via a location update acknowledgement message or an insert subscriber data message.
2. the user plane node: the device includes a second transmitting module which is configured to transmit information of a mobile virtual network operator subscribed by a subscriber to a control plane node, so that the control plane node differentiates between subscribers according to the information of the mobile virtual network operator subscribed by the subscriber. The second transmitting module is specifically configured to acquire the information of the mobile virtual network operator subscribed by the subscriber from the user plane node via a create session response message or a create PDP context response message.
3. the user equipment: as shown in FIG. 4, the device includes a third transmitting module 401 which is configured to report information of a mobile virtual network operator subscribed by a subscriber to a control plane node, so that the control plane node differentiates between subscribers according to the information of the mobile virtual network operator subscribed by the subscriber. The third transmitting module is specifically configured to:
   report the information of the mobile virtual network operator subscribed by the subscriber to the control plane node via an attachment request message or a routing area update request message or a tracking area update request message; or
   report the information of the mobile virtual network operator subscribed by the subscriber to the control plane node according to an access layer message transmitted by a base station, wherein, the access layer message is reported to the base station by the user equipment which is used by the subscriber.

The device also includes: a configuration information receiving module 402, configured to receive configuration information of the information of the virtual network operator subscribed by the subscriber. The configuration information receiving module is specifically configured to: receive the information of the mobile virtual network operator subscribed by the subscriber which is configured in a manner of open mobile architecture (OMA)-defined device manage or SIM card over-the-air, or, receive, by the user equipment which is used by the subscriber, the information of the mobile virtual network operator subscribed by the subscriber which is configured in an SIM card.

This embodiment is a product embodiment corresponding to the method for differentiating between subscribers according to the first embodiment and the second embodiment.

### Fourth Embodiment

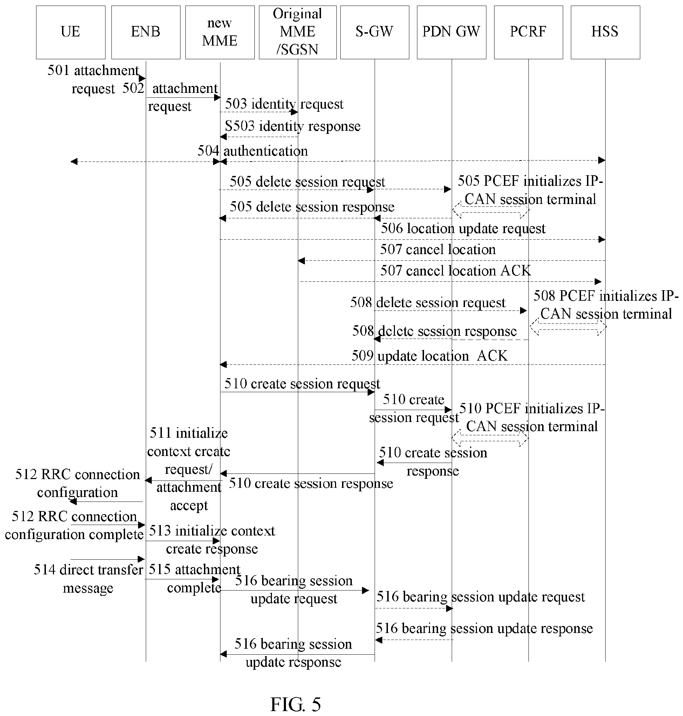

FIG. 5 is a schematic flow chart of an attachment of a UE to an evolved universal terrestrial radio access network (Evolved Universal Terrestrial Radio Access Network, EUTRAN) according to the present disclosure, and details are as follows:
In step 501, selecting, by a UE, a proper PLMN according to information broadcast by a base station, and initiating an attachment process. The UE transmits an RRC message to an ENB, and the selected PLMN ID information and the attachment request NAS message are included therein. Under a configuration of the MVNO, since PLMN ID information of a virtual operator cannot be broadcast or the virtual operator does not have its own PLMN ID information, at this time the PLMN information selected by the UE is not information of a real virtual operator.

In step 502, transmitting, by the ENB, an S1AP message to an MME, wherein the selected PLMN ID and the attachment request NAS message are included.

In step 503, if it is a new MME, obtaining, by the MME, UE context information from an original MME.

In step 504, the MME may initiate a process of re-authentication.

In step 505, if the MME has original bearing context information, then initiating a bearing deletion to an S-GW and a PGW.

In step 506, transmitting, by the new MME, location update request information to an HSS.

In step 507, if the HSS has registration information of an original serving node, then initiating a location deletion to the original serving node.

In step 508, if the original serving node has bearing context information, then initiating a bearing deletion to the S-GW and the PGW.

In step 509, transmitting, by the HSS, a location update acknowledgement message to the new MME, wherein subscriber data information of the UE is included. Information including a mobile virtual network operator MVNO/Partner subscribed by the UE indicates a relationship between the UE and the MVNO/partner. This information may be a specific MVNO/Partner name, and may also be an index.

In step 510, initiating, by the MME, a bearing session establishment to the SGW and the PGW. The message includes the PLMN information selected by the UE, and the PLMN information selected by the UE is transferred to the SGW and the PGW. The information of the mobile virtual network operator MVNO/Partner subscribed by the UE is also included in a create session request message which is transmitted by the MME to the S-GW and is transmitted by the S-GW to the P-GW. After receiving this information, the S-GW and the P-GW record it. During this process, in interactions between the PGW and the PCRF, the PGW may also transfer the information of the served mobile virtual network operator MVNO/Partner to the PCRF. The PGW may also transfer the information of the served MVNO/Partner to a charging system for charging.

In step 511, transmitting, by the MME, the S1-AP message to the ENB, wherein an attachment accept NAS message and PLMN information selected by the UE (i.e. the PLMN information providing the UE with services currently) are included. Besides the information above, the MME also transfers the acquired information of the served mobile virtual network operator MVNO/Partner to the eNB. The attachment accept NAS message transmitted by the MME may also include the information of the served mobile virtual network operator MVNO/partner. After receiving the information, the ENB and the UE records it.

In step 512, transmitting, by the ENB, the RRC message to the UE, wherein an attachment accept message is included. The UE responds the RRC message to the eNB.

In step 513, transmitting, by the ENB, an S1AP response message to the MME.

In step 514, transmitting, by the UE, a direct transfer message to the Enb, wherein an attachment complete NAS message is included.

In step 515, transmitting, by the ENB, the attachment complete message to the MME.

In step 516, initiating, by the MME, a bearing session update to the S-GW and the PGW.

In this embodiment, UE subscriber data information includes information of a mobile virtual network operator MVNO/Partner subscribed by a subscriber, during an attachment process, the UE subscriber data information including such information is transmitted to an MME, and then transmitted to all network nodes by the MME, so that all control plane nodes can differentiate between an MVNO subscriber and a real home subscriber, and in a case of network congestion, corresponding adjustment and control work can be done to the MVNO subscriber timely and effectively.

### Fifth Embodiment

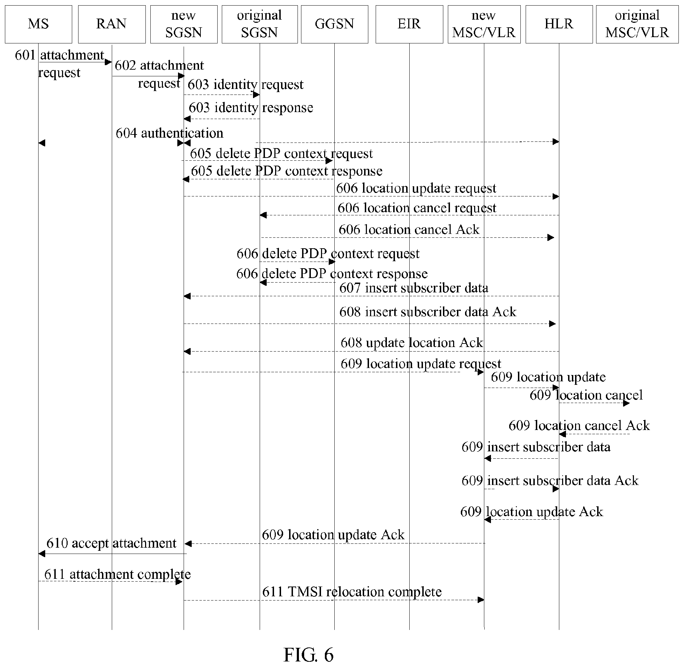

FIG. 6 shows a schematic flow chart of an attachment of a UE to a GERAN and an UTRAN, and details are as follows:
Different from the first embodiment, this embodiment is not accompanied with a bearing establishment during the attachment process. Steps 601-606 in this embodiment and steps 501-S506 in the first embodiment are the same basically; the bearing context information in the first embodiment corresponds to packet data protocol context herein, and all the control plane nodes in the first embodiment are adjusted appropriately in this embodiment.

The difference lies in, in step 607, in a manner of issuing subscriber data from an HLR (home location register: Home Location Register) to an SGSN (serving GPRS support node), or "insert subscriber data". If it is a joint attach process, the SGSN transmits a "location update request (location update Request)" to an MSC, and a manner in which the MSC acquires the subscriber data is "insert subscriber data".

After acquiring information of the served mobile virtual network operator MVNO/Partner from the subscriber data, the SGSN transfers this message to an MS (Mobile Station/Subscriber) via an NAS message "attach accept" message in step 611, and an Iu/Gb message from the SGSN to an RNC/BSC may also carry the information of the served mobile virtual network operator MVNO/Partner.

During the process of subsequent bearing establishment, similar to Embodiment 1, a bearing establishment message which is transmitted to the GGSN by the SGSN, or which is transmitted to the S-GW by the SGSN, or which is transmitted to the PGW by the S-GW also carries the information of the served mobile virtual network operator MVNO/partner acquired from the subscriber data.

### Sixth Embodiment

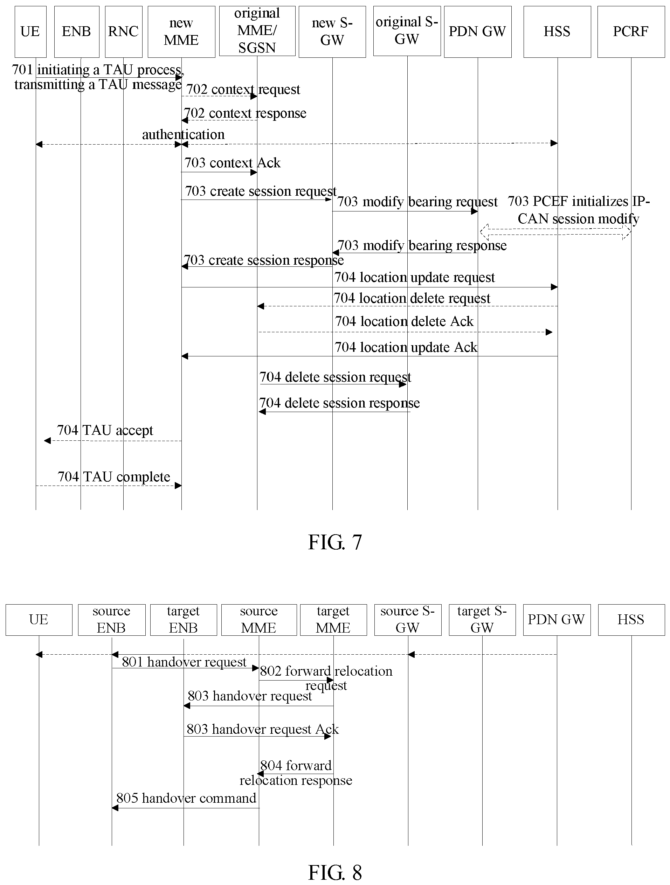

FIG. 7 and FIG. 8 are flow charts of mobility management and session management after the attachment is completed according to a sixth embodiment of the present disclosure.

In step 701, initiating, by the user equipment UE, a TAU process, initiating, by the user equipment UE, a TAU request to the ENB, and transmitting, by the ENB, the TAU request to the mobility management entity MME.

In step 702, if the mobility management entity MME is a new MME, then it needs to request a context from an original MME node, and information of the mobile virtual network operator MVNO/partner subscribed by the user equipment UE is included in a context response message fed back by the original MME node.

In step 703, if the SGW changes, transmitting, by the MME, a create session request message to the S-GW, wherein the create session request message includes the information of the mobile virtual network operator MVNO/partner subscribed by the UE.

In step 704, after acquiring the information of the MVNO/partner subscribed by the UE, transmitting, by the new MME, a TAU accept message to the UE, wherein the TAU accept message may include the information of the MVNO/partner subscribed by the UE.

Through the above steps, control plane nodes such as the new MME, the newly-changed S-GW and the UE are allowed to perceive the information of the MVNO/partner subscribed by the user equipment included, so that they can differentiate between an MVNO subscriber and a real subscriber subscribing a network.

A process of initiating an RAU in 2G/3G by the UE is similar to the above process, which will not be repeated herein.

Additionally, FIG. 8 is a flow chart of a handover according to a sixth embodiment of the present disclosure, and details are as follows:
In step 801, initiating, by a source eNB, a handover, and transmitting a handover request message to a source MME.

In step 802, transmitting, by the source MME, a forward relocation request to a target MME, wherein information of a mobile virtual network operator MVNO/partner subscribed by a UE needs to be included.

In step 803, after obtaining this information, issuing, by the target MME, a handover request message to a target eNB, wherein the handover request message includes the information of the mobile virtual network operator MVNO/partner subscribed by the UE.

In step 804, transmitting, by the target eNB, a handover request acknowledgement to the target MME.

In step 804, transmitting, by the target MME, a forward relocation response to the source MME.

In step 805, returning, by the source MME, a handover command to the source ENB.

The above steps can be completed after the network attachment process ends, and the information of the mobile virtual network operator MVNO/partner subscribed by the UE is acquired timely in subsequent mobility management and session management processes.

### Seventh Embodiment

In this embodiment, the information of the MVNO/partner subscribed by the subscriber is issued to network entities such as PGW/GGSN/SGW/MME/SGSN via PCRF during bearing establishment, rather than issued to MME/SGSN/MSC in a manner of subscriber data, then MME/SGSN network control entities issue the information to the UE via an NAS message, and issue to BSC/RNC/ENB via Gb (an interface between SGSN and BSC), Iu (an interface between SGSN and RNC) and S1AP (MME and eNB) interface messages, corresponding control plane nodes record the received information of the mobile virtual network operator MVNO/partner subscribed by the subscriber.

During the bearding establishment, the PCRF acquires the information of the MVNO/partner subscribed by the subscriber via an SPR and a UDR, and issues it to the PGW, the message may be IP-CAN session create or modify, the PGW transfers the information to the SGW via a create session response message, and the S-GW transfers the information to the MME via the create session response message. Processes of transference to the UE and the ENB by the MME are similar to the first embodiment, which will not be repeated herein.

As for accesses to a GERAN and a UTRAN, during bearing establishment, PCRF may also issue information of an MVNO/partner subscribed by a subscriber, which will not be repeated herein.

### Eighth Embodiment

This embodiment is a subsequent process after the user equipment UE receives the information of the MVNO/Partner subscribed by the subscriber as described in the embodiments above.

After the UE receives the information of the MVNO/Partner subscribed by the subscriber, in subsequent access processes, the RRC message may also carry the information of the mobile virtual network operator MVNO/Partner subscribed by the subscriber besides carrying a serving PLMN selected by the subscriber, in this case, BSC/Enb/RNC can perceive the information of the MVNO/Partner subscribed by the subscriber, when the network is congested, BSC/Enb/RNC may perform connection establishment reject or RRC connection establishment release according to the information of the MVNO/Partner subscribed by the subscriber.

### Ninth Embodiment

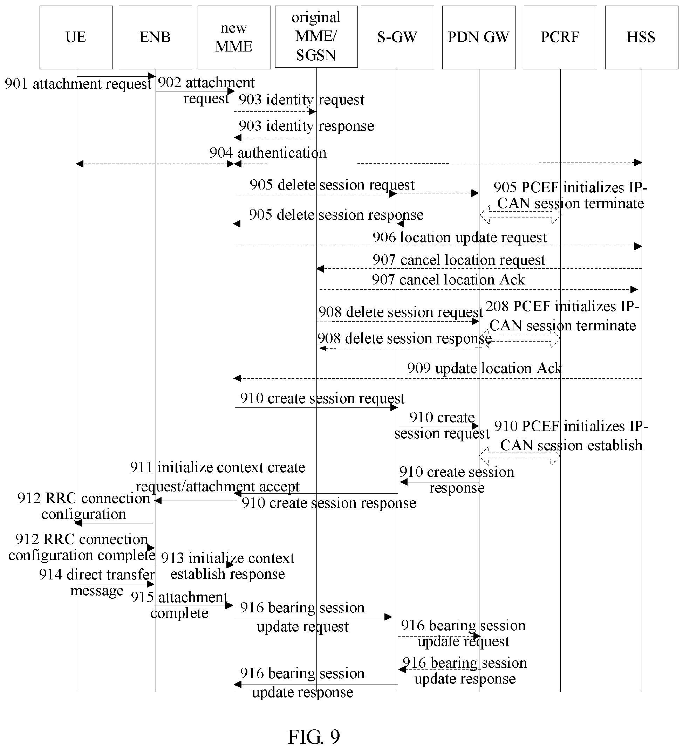

FIG. 9 is a schematic flow chart of an access of a UE to a network in an EUTRAN according to a ninth embodiment of the present disclosure, and details are as follows:
Information of a mobile virtual network operator subscribed by a subscriber is configured for a user equipment in advance, which may be implemented by configuring the information of the mobile virtual network operator subscribed by the subscriber in a manner of OMA DM or SIM OTA, or configuring the information of the mobile virtual network operator subscribed by the subscriber in a SIM card of the user equipment. In subsequent access processes, the user equipment provides the network with the information of the mobile virtual network operator configured above.

In step 901, selecting, by a UE, a proper PLMN according to information broadcast by a base station, and initiating an attachment process. The UE transmits an RRC message to an ENB, and the selected PLMN ID information and an attachment request NAS message are included therein. The information of the mobile virtual network operator MVNO/partner subscribed by the subscriber is also included.

In step 902, transmitting, by the ENB, an S1AP message to an MME, wherein the selected PLMN ID and the attachment request NAS message are included. The information of the mobile virtual network operator MVNO/partner subscribed by the subscriber may also be included. A manner of acquiring the information of the MVNO/Partner subscribed by the subscriber by the MME may also be the information being carried in the attachment request NAS message transmitted by the UE.

In step 903, if it is a new MME, obtaining, by the MME, UE context information from an original MME.

In step 904, the MME may initiate a process of re-authentication.

In step 905, if the MME has original bearing context information, then initiating a bearing deletion to an S-GW and a PGW.

In step 906, transmitting, by the new MME, location update request information to an HSS.

In step 907, if the HSS has original registration information, then initiating a location deletion to the original subscribed by node.

In step 908, if the original subscribed by node has bearing context information, then initiating a bearing deletion to the S-GW and the PGW.

In step 909, transmitting, by the HSS, a location update acknowledgement message to the new MME, wherein subscriber data information of the UE is included. Information including a subscribed mobile virtual network operator MVNO/Partner indicates a relationship between the subscriber and the MVNO/partner. This information may be a specific MVNO/Partner name, and may also be an index. This part of subscriber information may be included or may not be included. A purpose for including may be for verification, to verify whether the information of the mobile virtual network operator provided by the UE is correct.

In step 910, initiating, by the MME, a bearing session establishment to the SGW and the PGW. The message includes the PLMN information selected by the UE, and the PLMN information selected by the UE is transferred to the SGW and the PGW. The information of the mobile virtual network operator MVNO/Partner subscribed by the UE is also included in a create session request message which is transmitted by the MME to the S-GW and transmitted by the S-GW to the P-GW. After receiving this information, the S-GW and the P-GW record it. During this process, in interactions between the PGW and the PCRF, the PGW may also transfer the information of the subscribed mobile virtual network operator MVNO/Partner to the PCRF.

In step 911, transmitting, by the MME, the S1-AP message to the ENB, wherein an attachment accept NAS message and PLMN information selected by the UE (i.e., PLMN information providing the UE with services currently) are included. Besides the information above, the MME may also transfer the acquired information of the subscribed mobile virtual network operator MVNO/Partner to the eNB.

In step 912, transmitting, by the ENB, the RRC message to the UE, wherein an attachment accept message is included. The UE responds the RRC message to the eNB.

In step 913, transmitting, by the ENB, an S1AP response message to the MME.

In step 914, transmitting, by the UE, a direct transfer message to the Enb, wherein an attachment complete NAS message is included.

In step 915, transmitting, by the ENB, the attachment complete message to the MME.

In step 916, initiating, by the MME, a bearing session update to the S-GW and the PGW.

A manner of an access of the UE to a GERAN/UTRAN is similar to the embodiments above, which will not be repeated herein.

After acquiring the information of the mobile virtual network operator MVNO subscribed by the subscriber, the user equipment transmits the information to a base station by carrying it in an access layer message and/or a non-access layer message.

After finishing differentiating between the subscribers, embodiments of the present disclosure may also include: controlling the accessed quantity of mobile virtual network operator subscribers according to the differentiated subscribers, or controlling accessed service quality of mobile virtual network operator subscribers; or in a case of network congestion, preferentially rejecting an access request of the mobile virtual network operator subscribers or releasing connections of the mobile virtual network operator subscribers; or differentiating the mobile virtual network operator subscribers at the time of charging.

Additionally, embodiments of the present disclosure also provide a system for differentiating between subscribers, the system includes a control plane node device for differentiating between subscribers and a user plane node device and/or a user equipment which is used by the subscriber and/or a home subscriber server, the user plane node device and/or the user equipment which is used by the subscriber and/or the home subscriber server transmits information of a mobile virtual network operator subscribed by the subscriber to the control plane node device, the control plane node device acquires the information of the mobile virtual network operator subscribed by the subscriber, and differentiates between subscribers according to the information of the mobile virtual network operator subscribed by the subscriber acquired.

In embodiments of the present disclosure, a manner of acquiring information of a mobile virtual network operator MVNO/Partner subscribed by a subscriber includes: including the information of the MVNO/Partner subscribed by the subscriber in subscriber data or including the information of the MVNO/Partner subscribed by the subscriber in an SPR or a UDR, or configuring the information of the MVNO/Partner subscribed by the subscriber on a user equipment in advance. A node in a network acquires the information of the MVNO/Partner subscribed by the subscriber by subscriber data issuing it or a subscriber reporting it so as to differentiate whether the subscriber is a real subscriber subscribing the network or an MVNO subscriber, and in a case of network congestion, preferentially rejecting an access request of MVNO subscribers or release connections of
MVNO subscribers, thereby controlling accessed quantity and service quality of the MVNO subscribers effectively.

The above are merely exemplary embodiments of the present disclosure, and shall not be considered as a limitation to the present disclosure, whose scope is defined by the appended claims.

## Claims

1. A method for differentiating between subscribers, comprising:
acquiring (SI01), by a control plane node, information of a mobile virtual network operator subscribed by a subscriber; and
differentiating (S102), by the control plane node, between the subscriber, as a mobile virtual network operator subscriber, and a real subscriber subscribing to a network according to the information of the mobile virtual network operator subscribed by the subscriber;
wherein, after the differentiating, by the control plane node, between the subscriber, as a mobile virtual network operator subscriber, and the real subscriber subscribing to the network according to the information of the mobile virtual network operator subscribed by the subscriber, the method further comprises:
in a case of network congestion, rejecting, by the control plane node, an access request of a new mobile virtual network operator subscriber or releasing, by the control plane node, connections of the mobile virtual network operator subscriber.

2. The method for differentiating between subscribers according to claim 1, wherein, the acquiring (S101), by the control plane node, information of the mobile virtual network operator subscribed by the subscriber comprises:
receiving, by the control plane node, from a home subscriber server, the information of the mobile virtual network operator subscribed by the subscriber.

3. The method for differentiating between subscribers according to claim 2, wherein, the receiving, by the control plane node, from the home subscriber server, the information of the mobile virtual network operator subscribed by the subscriber comprises:
receiving, by the control plane node, from the home subscriber server, the information of the mobile virtual network operator subscribed by the subscriber via a location update acknowledgement message or an insert subscriber data message.

4. The method for differentiating between subscribers according to claim 1, wherein, the acquiring (S101), by the control plane node, information of the mobile virtual network operator subscribed by the subscriber comprises:
acquiring, by the control plane node, from a user plane node, the information of the mobile virtual network operator subscribed by the subscriber, wherein the information of the mobile virtual network operator subscribed by the subscriber is transmitted to the user plane node by a policy and charging rules function after the policy and charging rules function acquires the information of the mobile virtual network operator subscribed by the subscriber from a service processor, SPR, or a user data record, UDR.

5. The method for differentiating between subscribers according to claim 4, wherein, the acquiring, by the control plane node, from the user plane node, the information of the mobile virtual network operator subscribed by the subscriber comprises: acquiring, by the control plane node, from the user plane node, the information of the mobile virtual network operator subscribed by the subscriber via a create session response message or a create packet data protocol, PDP, context response message.

6. The method for differentiating between subscribers according to claim 1, wherein, the acquiring (S101), by the control plane node, information of the mobile virtual network operator subscribed by the subscriber comprises:
receiving, by the control plane node, the information of the mobile virtual network operator subscribed by the subscriber reported by a user equipment which is used by the subscriber.

7. The method for differentiating between subscribers according to claim 6, wherein, the receiving, by the control plane node, the information of the mobile virtual network operator subscribed by the subscriber reported by the user equipment which is used by the subscriber comprises:
receiving, by the control plane node, the information of the mobile virtual network operator subscribed by the subscriber reported by the user equipment which is used by the subscriber via an attachment request message or a routing area update request message or a tracking area update request message.

8. The method for differentiating between subscribers according to claim 1, wherein, the method further comprises:
transmitting, by the control plane node, a create session request message or a create packet data protocol, PDP, context request message which comprises the information of the mobile virtual network operator subscribed by the subscriber to a user plane node.

9. The method for differentiating between subscribers according to claim 1, wherein, the method further comprises:
transmitting, by the control plane node, a message which comprises the information of the mobile virtual network operator subscribed by the subscriber to a user equipment.

10. The method for differentiating between subscribers according to claim 1, wherein, the information of the mobile virtual network operator subscribed by the subscriber is a mobile virtual network operator name or can be mapped into an index of the mobile virtual network operator name.

11. A control plane node device for differentiating between subscribers, the device comprises:
an acquiring unit (301), configured to acquire information of a mobile virtual network operator subscribed by a subscriber; and
a differentiating unit (302), configured to differentiate between the subscriber, as a mobile virtual network operator subscriber, and a real subscriber subscribing to a network according to the information of the mobile virtual network operator subscribed by the subscriber;
the differentiating unit (302) is further configured to:
in a case of network congestion, reject an access request of a new mobile virtual network operator subscriber or release connections of the mobile virtual network operator subscriber.

12. The device according to claim 11, wherein, the acquiring unit (301) comprises:
a first acquiring sub-unit (3011), configured to receive, from a home subscriber server, the information of the mobile virtual network operator subscribed by the subscriber; or
a second acquiring sub-unit (3012), configured to acquire, from a user plane node, the information of the mobile virtual network operator subscribed by the subscriber, wherein, the information of the mobile virtual network operator subscribed by the subscriber is transmitted to the user plane node by a policy and charging rules function after the policy and charging rules function acquires the information of the mobile virtual network operator subscribed by the subscriber from a service processor, SPR or a user data record, UDR; or
a reporting sub-unit (3013), configured to receive the information of the mobile virtual network operator subscribed by the subscriber reported by a user equipment which is used by the subscriber.

13. A system for differentiating between subscribers, the system comprises:
a control plane node device for differentiating between the subscribers and a home subscriber server,
wherein the control plane node device is configured to:
acquire information of the mobile virtual network operator subscribed by the subscriber and differentiates between the subscriber, as a mobile virtual network operator subscriber, and a real subscriber subscribing to a network according to the information of the mobile virtual network operator subscribed by the subscriber; and
in a case of network congestion, reject an access request of a new mobile virtual network operator subscriber or release connections of the mobile virtual network operator subscriber; and
wherein the home subscriber server is configured to:
transmit information of a mobile virtual network operator subscribed by the subscriber to the control plane node device.

## Patentansprüche

1. Verfahren zur Unterscheidung zwischen Teilnehmern, das Folgendes umfasst:
Erfassen (S101), durch einen Steuerebenenknoten, von Informationen eines mobilen virtuellen Netzwerkbetreibers, bei dem sich ein Teilnehmer registriert hat; und
Unterscheiden (S102), durch den Steuerebenenknoten, zwischen dem Teilnehmer als einem Teilnehmer eines mobilen virtuellen Netzwerkbetreibers und einem echten Teilnehmer, der sich bei einem Netzwerk registriert, gemäß den Informationen des mobilen virtuellen Netzwerkbetreibers, bei dem sich der Teilnehmer registriert hat;
wobei, nach dem Unterscheiden, durch den Steuerebenenknoten, zwischen dem Teilnehmer als einem Teilnehmer eines mobilen virtuellen Netzwerkbetreibers und dem echten Teilnehmer, der sich bei dem Netzwerk registriert, gemäß den Informationen des mobilen virtuellen Netzwerkbetreibers, bei dem sich der Teilnehmer registriert hat, das Verfahren ferner Folgendes umfasst:
in einem Fall von Netzwerküberlastung, Zurückweisen, durch den Steuerebenenknoten, einer Zugangsanforderung eines neuen Teilnehmers des mobilen virtuellen Netzwerkbetreibers, oder Freigeben, durch den Steuerebenenknoten, von Verbindungen des Teilnehmers des mobilen virtuellen Netzwerkbetreibers.

2. Verfahren zur Unterscheidung zwischen Teilnehmern nach Anspruch 1, wobei das Erfassen (S101), durch den Steuerebenenknoten, von Informationen des mobilen virtuellen Netzwerkbetreibers, bei dem sich der Teilnehmer registriert hat, Folgendes umfasst:
Empfangen, durch den Steuerebenenknoten, von einem "Home Subscriber Server", der Informationen des mobilen virtuellen Netzwerkbetreibers, bei dem sich der Teilnehmer registriert hat.

3. Verfahren zur Unterscheidung zwischen Teilnehmern nach Anspruch 2, wobei das Empfangen, durch den Steuerebenenknoten, vom Home Subscriber Server, der Informationen des mobilen virtuellen Netzwerkbetreibers, bei dem sich der Teilnehmer registriert hat, Folgendes umfasst:
Empfangen, durch den Steuerebenenknoten, von dem "Home Subscriber Server", der Informationen des mobilen virtuellen Netzwerkbetreibers, bei dem sich der Teilnehmer registriert hat, über eine Positionsaktualisierungsbestätigungsnachricht oder eine Teilnehmereinfugungs-Datennachricht.

4. Verfahren zur Unterscheidung zwischen Teilnehmern nach Anspruch 1, wobei das Erfassen (S101), durch den Steuerebenenknoten, von Informationen des mobilen virtuellen Netzwerkbetreibers, bei dem sich der Teilnehmer registriert hat, Folgendes umfasst:
Erfassen, durch den Steuerebenenknoten, von einem Benutzerebenenknoten, der Informationen des mobilen virtuellen Netzwerkbetreibers, bei dem sich der Teilnehmer registriert hat, wobei die Informationen des mobilen virtuellen Netzwerkbetreibers, bei dem sich der Teilnehmer registriert hat, durch eine Richtlinien- und Abrechnungsregelfunktion an den Benutzerebenenknoten gesendet werden, nachdem die Richtlinien- und Abrechnungsregelfunktion die Informationen des mobilen virtuellen Netzwerkbetreibers, bei dem sich der Teilnehmer registriert hat, von einem Serviceprozessor (SPR) oder einem Benutzerdatensatz (UDR, "User Data Record") erfasst.

5. Verfahren zur Unterscheidung zwischen Teilnehmern nach Anspruch 4, wobei das Erfassen, durch den Steuerebenenknoten, von dem Benutzerebenenknoten, der Informationen des mobilen virtuellen Netzwerkbetreibers, bei dem sich der Teilnehmer registriert hat, Folgendes umfasst: Erfassen, durch den Steuerebenenknoten, von dem Benutzerebenenknoten, der Informationen des mobilen virtuellen Netzwerkbetreibers, bei dem sich der Teilnehmer registriert hat, über eine PDP-Kontextantwortnachricht ("Packet Data Protocol", Paketdatenprotokoll).

6. Verfahren zur Unterscheidung zwischen Teilnehmern nach Anspruch 1, wobei das Erfassen (S101), durch den Steuerebenenknoten, von Informationen des mobilen virtuellen Netzwerkbetreibers, bei dem sich der Teilnehmer registriert hat, Folgendes umfasst:
Empfangen, durch den Steuerebenenknoten, der Informationen des mobilen virtuellen Netzwerkbetreibers, bei dem sich der Teilnehmer registriert hat, gemeldet durch ein Benutzergerät, das durch den Teilnehmer verwendet wird.

7. Verfahren zur Unterscheidung zwischen Teilnehmern nach Anspruch 6, wobei das Empfangen, durch den Steuerebenenknoten, der Informationen des mobilen virtuellen Netzwerkbetreibers, bei dem sich der Teilnehmer registriert hat, gemeldet durch das Benutzergerät, das durch den Teilnehmer verwendet wird, Folgendes umfasst:
Empfangen, durch den Steuerebenenknoten, der Informationen des mobilen virtuellen Netzwerkbetreibers, bei dem sich der Teilnehmer registriert hat, gemeldet durch das Benutzergerät, das durch den Benutzer verwendet wird, über eine Anhängeanforderungsnachricht oder eine Weiterleitungsbereich-Aktualisierungsanforderungsnachricht oder eine Nachverfolgungsbereich-Aktualisierungsanforderungsnachricht.

8. Verfahren zur Unterscheidung zwischen Teilnehmern nach Anspruch 1, wobei das Verfahren ferner Folgendes umfasst:
Senden, durch den Steuerebenenknoten, einer Sitzungsanforderung-Erstellungsnachricht oder einer PDP-Kontextanforderung-Erstellungsnachricht (Paketdatenprotokoll), die die Informationen des mobilen virtuellen Netzwerkbetreibers, bei dem sich der Teilnehmer registriert hat, umfasst, an einen Benutzerebenenknoten.

9. Verfahren zur Unterscheidung zwischen Teilnehmern nach Anspruch 1, wobei das Verfahren ferner Folgendes umfasst:
Senden, durch den Steuerebenenknoten, einer Nachricht, die die Informationen des mobilen virtuellen Netzwerkbetreibers umfasst, bei dem sich der Teilnehmer registriert hat, an ein Benutzergerät.

10. Verfahren zur Unterscheidung zwischen Teilnehmern nach Anspruch 1, wobei die Informationen des mobilen virtuellen Netzwerkbetreibers, bei dem sich der Teilnehmer registriert hat, ein Name des mobilen virtuellen Netzwerkbetreibers ist oder in einen Index des mobilen virtuellen Netzwerkbetreibernamens abgebildet werden kann.

11. Steuerebenenknotenvorrichtung zur Unterscheidung zwischen Teilnehmern, wobei die Vorrichtung Folgendes umfasst:
eine Erfassungseinheit (301), ausgelegt zum Erfassen von Informationen eines mobilen virtuellen Netzwerkbetreibers, bei dem sich ein Teilnehmer registriert hat; und
eine Unterscheidungseinheit (302), ausgelegt zum Unterscheiden zwischen dem Teilnehmer als einem Teilnehmer eines mobilen virtuellen Netzwerkbetreibers und einem echten Teilnehmer, der sich bei einem Netzwerk registriert, gemäß den Informationen des mobilen virtuellen Netzwerkbetreibers, bei dem sich der Teilnehmer registriert hat;
wobei die Unterscheidungseinheit (302) ferner ausgelegt ist zum:
in einem Fall von Netzwerküberlastung, Zurückweisen einer Zugangsanforderung eines neuen Teilnehmers des mobilen virtuellen Netzwerkbetreibers, oder Freigeben von Verbindungen des Teilnehmers des mobilen virtuellen Netzwerkbetreibers.

12. Vorrichtung nach Anspruch 11, wobei die Erfassungseinheit (301) Folgendes umfasst:
eine erste Erfassungsteileinheit (3011), ausgelegt zum Empfangen, durch den Steuerebenenknoten, von einem "Home Subscriber Server", der Informationen des mobilen virtuellen Netzwerkbetreibers, bei dem sich der Teilnehmer registriert hat; oder
eine zweite Erfassungsteileinheit (3012), ausgelegt zum Erfassen von einem Benutzerebenenknoten, der Informationen des mobilen virtuellen Netzwerkbetreibers, bei dem sich der Teilnehmer registriert hat, wobei die Informationen des mobilen virtuellen Netzwerkbetreibers, bei dem sich der Teilnehmer registriert hat, durch eine Richtlinien- und Abrechnungsregelfunktion an den Benutzerebenenknoten gesendet werden, nachdem die Richtlinien- und Abrechnungsregelfunktion die Informationen des mobilen virtuellen Netzwerkbetreibers, bei dem sich der Teilnehmer registriert hat, von einem Serviceprozessor (SPR) oder einem Benutzerdatensatz (UDR, "User Data Record") erfasst; oder
eine Meldeteileinheit (3013), ausgelegt zum Empfangen der Informationen des mobilen virtuellen Netzwerkbetreibers, bei dem sich der Teilnehmer registriert hat, gemeldet durch ein Benutzergerät, das durch den Teilnehmer verwendet wird.

13. System zur Unterscheidung zwischen Teilnehmern, wobei das System Folgendes umfasst:
eine Steuerebenenknotenvorrichtung zur Unterscheidung zwischen den Teilnehmern und einem "Home Subscriber Server",
wobei die Steuerebenenknotenvorrichtung ausgelegt ist zum:
Erfassen der Informationen des mobilen virtuellen Netzwerkbetreibers, bei dem sich der Teilnehmer registriert hat, und Unterscheiden zwischen dem Teilnehmer als einem Teilnehmer eines mobilen virtuellen Netzwerkbetreibers und einem echten Teilnehmer, der sich bei einem Netzwerk registriert, gemäß den Informationen des mobilen virtuellen Netzwerkbetreibers, bei dem sich der Teilnehmer registriert hat; und
in einem Fall von Netzwerküberlastung, Zurückweisen einer Zugangsanforderung eines neuen Teilnehmers des mobilen virtuellen Netzwerkbetreibers, oder Freigeben von Verbindungen des Teilnehmers des mobilen virtuellen Netzwerkbetreibers; und
wobei der "Home Subscriber Server" ausgelegt ist zum:
Senden von Informationen eines mobilen virtuellen Netzwerkbetreibers, bei dem sich der Teilnehmer registriert hat, an die Steuerebenenknotenvorrichtung.

## Revendications

1. Procédé permettant de différencier des abonnés, comprenant les étapes suivantes :
acquérir (S101), par un noeud de plan de contrôle, des informations d'un opérateur de réseau virtuel mobile souscrit par un abonné ; et
différencier (S102), par le noeud de plan de contrôle, l'abonné, en tant qu'abonné d'opérateur de réseau virtuel mobile, et un abonné réel souscrivant à un réseau selon les informations de l'opérateur de réseau virtuel mobile souscrit par l'abonné ;
après l'étape de différenciation, par le noeud de plan de contrôle, de l'abonné, en tant qu'abonné d'opérateur de réseau virtuel mobile, et de l'abonné réel souscrivant au réseau selon les informations de l'opérateur de réseau virtuel mobile souscrit par l'abonné, le procédé comprenant en outre :
dans un cas d'encombrement de réseau, rejeter, par le noeud de plan de contrôle, une requête d'accès d'un nouvel abonné d'opérateur de réseau virtuel mobile ou libérer, par le noeud de plan de contrôle, des connexions de l'abonné d'opérateur de réseau virtuel mobile.

2. Procédé permettant de différencier des abonnés selon la revendication 1, dans lequel l'étape d'acquisition (S101), par le noeud de plan de contrôle, d'informations de l'opérateur de réseau virtuel mobile souscrit par l'abonné comprend :
recevoir, par le noeud de plan de contrôle, à partir d'un serveur des abonnés nominaux, les informations de l'opérateur de réseau virtuel mobile souscrit par l'abonné.

3. Procédé permettant de différencier des abonnés selon la revendication 2, dans lequel l'étape de réception, par le noeud de plan de contrôle, à partir du serveur des abonnés nominaux, des informations de l'opérateur de réseau virtuel mobile souscrit par l'abonné comprend :
recevoir, par le noeud de plan de contrôle, à partir du serveur des abonnés nominaux, les informations de l'opérateur de réseau virtuel mobile souscrit par l'abonné par le biais d'un message d'accusé de réception de mise à jour d'emplacement ou d'un message Insérer les données d'abonné.

4. Procédé permettant de différencier des abonnés selon la revendication 1, dans lequel l'étape d'acquisition (S101), par le noeud de plan de contrôle, des informations de l'opérateur de réseau virtuel mobile souscrit par l'abonné comprend :
acquérir, par le noeud de plan de contrôle, à partir d'un noeud de plan utilisateur, les informations de l'opérateur de réseau virtuel mobile souscrit par l'abonné, les informations de l'opérateur de réseau virtuel mobile souscrit par l'abonné étant transmises au noeud de plan utilisateur par une fonction de règles de politique et de facturation après que la fonction de règles de politique et de facturation a acquis les informations de l'opérateur de réseau virtuel mobile souscrit par l'abonné à partir d'un processeur de service, SPR, ou d'un enregistrement de données utilisateur, UDR.

5. Procédé permettant de différencier des abonnés selon la revendication 4, dans lequel l'étape consistant à acquérir, par le noeud de plan de contrôle, à partir du noeud de plan utilisateur, les informations de l'opérateur de réseau virtuel mobile souscrit par l'abonné comprend : acquérir, par le noeud de plan de contrôle, à partir du noeud de plan utilisateur, les informations de l'opérateur de réseau virtuel mobile souscrit par l'abonné par le biais d'un message Créer une réponse de session ou d'un message Créer une réponse de contexte de protocole de données par paquet, PDP.

6. Procédé permettant de différencier des abonnés selon la revendication 1, dans lequel l'étape d'acquisition (S101), par le noeud de plan de contrôle, d'informations de l'opérateur de réseau virtuel mobile souscrit par l'abonné comprend :
recevoir, par le noeud de plan de contrôle, les informations de l'opérateur de réseau virtuel mobile souscrit par l'abonné rapportées par un équipement utilisateur qui est utilisé par l'abonné.

7. Procédé permettant de différencier des abonnés selon la revendication 6, dans lequel l'étape de réception, par le noeud de plan de contrôle, des informations de l'opérateur de réseau virtuel mobile souscrit par l'abonné rapportées par l'équipement utilisateur qui est utilisé par l'abonné comprend :
recevoir, par le noeud de plan de contrôle, les informations de l'opérateur de réseau virtuel mobile souscrit par l'abonné rapportées par l'équipement utilisateur qui est utilisé par l'abonné par le biais d'un message de requête d'attachement ou d'un message de requête de mise à jour de zone de routage ou d'un message de requête de mise à jour de zone de poursuite.

8. Procédé permettant de différencier des abonnés selon la revendication 1, dans lequel le procédé comprend en outre :
transmettre, par le noeud de plan de contrôle, un message Créer une requête de session ou un message Créer une requête de contexte de protocole de données par paquet, PDP, qui comporte les informations de l'opérateur de réseau virtuel mobile souscrit par l'abonné à un noeud de plan utilisateur.

9. Procédé permettant de différencier des abonnés selon la revendication 1, dans lequel le procédé comprend en outre :
transmettre, par le noeud de plan de contrôle, un message qui comporte les informations de l'opérateur de réseau virtuel mobile souscrit par l'abonné à un équipement utilisateur.

10. Procédé permettant de différencier des abonnés selon la revendication 1, dans lequel les informations de l'opérateur de réseau virtuel mobile souscrit par l'abonné sont un nom d'opérateur de réseau virtuel mobile ou peuvent être mappées à un index du nom d'opérateur de réseau virtuel mobile.

11. Dispositif de noeud de plan de contrôle permettant de différencier des abonnés, le dispositif comprenant :
une unité d'acquisition (301), configurée pour acquérir des informations d'un opérateur de réseau virtuel mobile souscrit par un abonné ; et
une unité de différenciation (302), configurée pour différencier l'abonné, en tant qu'abonné d'opérateur de réseau virtuel mobile, et un abonné réel souscrivant à un réseau selon les informations de l'opérateur de réseau virtuel mobile souscrit par l'abonné ;
l'unité de différenciation (302) est en outre configurée pour :
dans un cas d'encombrement de réseau, rejeter une requête d'accès d'un nouvel abonné d'opérateur de réseau virtuel mobile ou libérer des connexions de l'abonné d'opérateur de réseau virtuel mobile.

12. Dispositif selon la revendication 11, dans lequel l'unité d'acquisition (301) comprend :
une première sous-unité d'acquisition (3011), configurée pour recevoir, à partir d'un serveur des abonnés nominaux, les informations de l'opérateur de réseau virtuel mobile souscrit par l'abonné ; ou
une deuxième sous-unité d'acquisition (3012), configurée pour acquérir, à partir d'un noeud de plan utilisateur, les informations de l'opérateur de réseau virtuel mobile souscrit par l'abonné, les informations de l'opérateur de réseau virtuel mobile souscrit par l'abonné étant transmises au noeud de plan utilisateur par une fonction de règles de politique et de facturation après que la fonction de règles de politique et de facturation a acquis les informations de l'opérateur de réseau virtuel mobile souscrit par l'abonné à partir d'un processeur de service, SPR, ou d'un enregistrement de données utilisateur, UDR ; ou
une sous-unité de réception (3013), configurée pour recevoir les informations de l'opérateur de réseau virtuel mobile souscrit par l'abonné rapportées par un équipement utilisateur qui est utilisé par l'abonné.

13. Système permettant de différencier des abonnés, le système comprenant :
un dispositif de noeud de plan de contrôle destiné à différencier les abonnés et un serveur des abonnés nominaux,
le dispositif de noeud de plan de contrôle étant configuré pour :
acquérir des informations de l'opérateur de réseau virtuel mobile souscrit par l'abonné et différencier l'abonné, en tant qu'abonné d'opérateur de réseau virtuel mobile, et un abonné réel souscrivant à un réseau selon les informations de l'opérateur de réseau virtuel mobile souscrit par l'abonné ; et
dans un cas d'encombrement de réseau, rejeter une requête d'accès d'un nouvel abonné d'opérateur de réseau virtuel mobile ou libérer des connexions de l'abonné d'opérateur de réseau virtuel mobile ; et
le serveur des abonnés nominaux étant configuré pour :
transmettre des informations d'un opérateur de réseau virtuel mobile souscrit par l'abonné au dispositif de noeud de plan de contrôle.
